(19) Europäisches Patentamt
European Patent Office
Office européen des brevets

(11) **EP 2 172 257 A1**

(12) **EUROPEAN PATENT APPLICATION**
published in accordance with Art. 153(4) EPC

(43) Date of publication:
**07.04.2010 Bulletin 2010/14**

(51) Int Cl.:
***B01D 67/00*** (2006.01)

(21) Application number: **08778280.1**

(22) Date of filing: **18.07.2008**

(86) International application number:
**PCT/JP2008/062988**

(87) International publication number:
**WO 2009/011415 (22.01.2009 Gazette 2009/04)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **19.07.2007 JP 2007188773**

(71) Applicant: **Kurita Water Industries Ltd.
Shinjuku-ku, Tokyo 160-8383 (JP)**

(72) Inventors:
• **HAYAKAWA, Kunihiro
Tokyo 160-8383 (JP)**
• **KAWAKATSU, Takahiro
Tokyo 160-8383 (JP)**

(74) Representative: **Barnfather, Karl Jon
Withers & Rogers LLP
Goldings House
2 Hays Lane
London SE1 2HW (GB)**

(54) **METHOD FOR IMPROVING BLOCKING RATE OF PERMEABLE MEMBRANE, BLOCKING RATE IMPROVED PERMEABLE MEMBRANE, AND PERMEBALE MEMBRANE TREATMENT METHOD AND APPARATUS**

(57) 1. A method of enhancing rejection of a permeable membrane, comprising
contacting the permeable membrane with
a rejection enhancing agent comprising a hydrophilic polymer having no hydrophobic group having 8 or more carbon atoms and
a modifying agent comprising a water soluble polymer having a hydrophobic group having 8 or more carbon atoms.

F i g . 1

**Description**

Field of the Invention

This invention relates to a method of enhancing rejection, in particular, enhancing organic matter rejection of a permeable membrane such as reverse osmosis membrane, nano-filtration membrane, and so on. This invention also relates to a rejection enhancing treatment agent and to a rejection-enhanced membrane obtained thereby. This invention further relates to a method of permeable membrane treatment using the treated membrane and an apparatus for treatment by a permeable membrane suitable for these.

Background of the Invention

Rejection of objects to be separated such as inorganic electrolytes and water soluble organic compounds by a permeable membrane used in water treatment, in particular, by a selective permeable membrane such as nano-filtration membrane and reverse osmosis membrane (RO membrane) decreases by deterioration of material organic polymers due to effects of oxidizing compounds, reducing compounds and others, and other reasons which causes it difficult to gain necessary quality of the treated water. Such change occurs gradually during a long time use of the membrane or momentarily by an accident. Therefore, it has been practiced to enhance rejection of permeable membrane deteriorated in its rejection with a rejection enhancing agent in order to recover the performance.

An ordinary ultra high purity water production system for producing pure water of ultra high purity is equipped with a reverse osmosis membrane treatment apparatus and an electric regeneration type deionizer or other ion exchangers for high degree treatment of the permeated water from the reverse osmosis membrane treatment apparatus. Recent progress in semiconductor circuit forming technique, enabling production of circuits having a line width of 65 nm or lower, increases required quality of ultra high purity water and requirement to an apparatus and method which enable to produce pure water of higher level in order to reduce loads in succeeding steps. Since organic components are suspected to have influences to devices, treated water excluding these components is requested.

In these ultra high purity water production system, there is proposed a treatment of reverse osmosis membrane by a rejection enhancing agent. In patent document 1, for example, there is proposed a treatment of reverse osmosis membrane by poly alkylene glycol having weight average molecular weight of 2000 - 6000, or an ionic polymer composed of the above poly alkylene glycol having introduced functional groups.

Patent document 2 teaches a rejection enhancing agent for enhancing rejection of polyamide membrane in production of water softening membrane, comprising hydrolyzable tannic acid; styrene/maleamic acid copolymer; homo-, co- or ter-polymer of hydroxyl ($C_4$ -$C_6$) alkyl methacrylate; a coacervate prepared from a first polymer bearing a plurality of sulfonium or quaternary ammonium groups and a second polymer bearing a plurality of carboxylate groups; branched polyamidoamines optionally bearing other substituents; vinyl acetate copolymers; and copolymer of hydroxyethyl methacrylate and methacrylic acid or methacrylamide (optionally including other compatible monomers).

Further, patent document 3 discloses a rejection enhancing agent for a permeable membrane used in water treatment comprising an ionic polymer having weight average molecular weight of 100,000 or more. The ionic polymer includes poly vinyl amidine or a derivative thereof, a cationic polymer such as a cationic polymer having a heterocycle, and an anionic polymer such as poly acrylic acid, a derivative thereof, poly styrene sulfonic acid and a derivative thereof.

In the prior technique of rejection enhancing treatment of permeable membrane, the above rejection enhancing agent is supplied to contact with the membrane in the state before or after installation to modules, wherein whole or a part of the agent combines to the surfaces or inner portions of the structural materials of the membrane by adhesion or reaction to cause modifying treatment so that the rejection of the permeable membrane is enhanced.

[Patent document 1] JPA2008-36605
[Patent document 2] JPB2762358
[Patent document 3] JPA2006-110520

Disclosure of the Invention

In the prior technique of rejection enhancing treatment of a permeable membrane mentioned above, it is assumed that a rejection enhancing agent of a hydrophilic polymer adsorbed into pores of the membrane prevents the permeation of solute to cause rejection enhancement. However, the effect of rejection enhancement is not sufficient and further improvement in enhancement of rejection, in particular, organic matter rejection is requested. Since water flux (bundle of flow) becomes generally lower by rejection enhancing treatment, rejection enhancing treatment without decline of flux is sought.

An object of the present invention is to respond to these requests and to provide;

a method of enhancing rejection of a permeable membrane by which an enhanced rejection, especially enhanced organic matter rejection of a permeable membrane with minimal flux decline is available, enabling high organic matter removal and steady treatment by the membrane,
a rejection enhancing treatment agent used in the method,
a rejection-enhanced membrane obtained thereby,
a method of permeable membrane treatment using the membrane and
an apparatus for treatment by the permeable membrane suitable for these.

The present invention includes the following methods of enhancing rejection of permeable membranes, the rejection enhancing treatment agent, the rejection-enhanced membrane, the method and apparatus for treatment by the permeable membranes.

(1) A method of enhancing rejection of a permeable membrane, comprising
contacting the permeable membrane with
a rejection enhancing agent comprising a hydrophilic polymer having no hydrophobic group having 8 or more carbon atoms and
a modifying agent comprising a water soluble polymer having a hydrophobic group having 8 or more carbon atoms.
(2) A method of enhancing rejection of a permeable membrane, comprising
contacting the permeable membrane with a mixed treatment agent comprising
a rejection enhancing agent comprising a hydrophilic polymer having no hydrophobic group having 8 or more carbon atoms and
a modifying agent comprising a water soluble polymer having a hydrophobic group having 8 or more carbon atoms,
wherein the concentration of the rejection enhancing agent in the mixed treatment agent is double or more of the concentration of the modifying agent.
(3) A method of enhancing rejection of a permeable membrane, comprising
contacting the permeable membrane with a rejection enhancing agent comprising a hydrophilic polymer having no hydrophobic group having 8 or more carbon atoms and
then contacting the permeable membrane with a modifying agent comprising a water soluble polymer having a hydrophobic group having 8 or more carbon atoms.
(4) The method as defined in any one of the above (1) to (3), wherein the rejection enhancing agent is a compound having a poly alkylene glycol chain.
(5) The method as defined in any one of the above (1) to (4), wherein the modifying agent has a hydrophobic group comprising alkyl or alkylene group having 8 - 20 carbon atoms.
(6) The method as defined in any one of the above (1) to (5), wherein the modifying agent is a surfactant having a hydrophilic group and a hydrophobic group.
(7) A permeable membrane obtained by the method as defined in any one of the above (1) to (6).
(8) A method of permeable membrane treatment, comprising
passing a liquid to be treated through the permeable membrane obtained by the method as defined in any one of the above (1) to (6).
(9) An apparatus for permeable membrane treatment, comprising
the permeable membrane obtained by the method as defined in any one of the above (1) to (6) and
means for passing a liquid to be treated through the permeable membrane.
(10) An apparatus for permeable membrane treatment, comprising
a module of a permeable membrane adapted to supply a liquid to be treated to the primary side and to withdraw a permeate from the secondary side,
a rejection enhancing agent treatment device adapted to supply to the primary side of the module a rejection enhancing agent comprising a hydrophilic polymer having no hydrophobic group having 8 or more carbon atoms to contact with the permeable membrane and
a modifying agent treatment device adapted to supply to the primary side of the module a modifying agent comprising a water soluble polymer having a hydrophobic group having 8 or more carbon atoms to contact with the permeable membrane.
(11) A rejection enhancing treatment agent for rejection enhancing treatment of a permeable membrane by contacting with the permeable membrane, comprising
a rejection enhancing agent comprising a hydrophilic polymer having no hydrophobic group having 8 or more carbon atoms and
a modifying agent comprising a water soluble polymer having a hydrophobic group having 8 or more carbon atoms.
(12) The treatment agent as defined in the above (11), comprising a mixture of
a rejection enhancing agent comprising a hydrophilic polymer having no hydrophobic group having 8 or more carbon atoms and

a modifying agent comprising a water soluble polymer having a hydrophobic group having 8 or more carbon atoms, wherein the concentration of the rejection enhancing agent in the mixture is double or more of the concentration of the modifying agent.

(13) The treatment agent as defined in the above (11) or (12), wherein the rejection enhancing agent is a compound having a poly alkylene glycol chain.

(14) The treatment agent as defined in any one of the above (11) to (13), wherein the modifying agent has a hydrophobic group comprising alkyl or alkylene group having 8 - 20 carbon atoms.

(15) The treatment agent as defined in any one of the above (11) to (14), wherein the modifying agent is a surfactant having a hydrophilic group and a hydrophobic group.

The permeable membrane to be treated according to the present invention is one to be used for permeable membrane treatment by supplying a liquid to be treated to the primary side and withdrawing a permeate from the secondary side. A preferred membrane is a selectively permeable membrane such as a reverse osmosis membrane, a nano-filtration membrane or the like, which separates inorganic electrolytes, water soluble organic compounds, etc from the water. The reverse osmosis membrane (RO membrane) is a liquid separation membrane used for permeating a solvent to the secondary side of the membrane while rejecting a solute by pressurizing the primary side at a higher pressure than the osmotic pressure.

Membrane structure of the permeable membrane, in particular, RO membrane, includes a polymer membrane such as a composite membrane, a phase-separation membrane, etc. Illustrative materials of a permeable membrane, in particular, RO membrane applicable to the present invention, includes a material based on polyamide such as aromatic polyamide, aliphatic polyamide and complex of these. Among these, aromatic polyamide permeable membrane, especially aromatic polyamide RO membrane is suitable for the rejection enhancing treatment of the present invention. The rejection enhancing treatment is applicable to both of an unused membrane and a used and deteriorated membrane.

The rejection enhancing treatment of the present invention can be carried out to the permeable membrane in the state before or after installation to a module of a membrane separation apparatus. The rejection enhancing treatment can be applied without special limitation to any types of the RO membrane module, for example, a tubular membrane module, a flat membrane module, a spiral membrane module and a hollow fiber membrane module.

The rejection enhancing treatment can be carried out to both of an unused membrane and a used and deteriorated membrane after cleaning with chemicals. In the case of a used and deteriorated membrane, the rejection enhancing treatment is preferably carried out after chemical cleaning. The purpose of the chemical cleaning is to remove fouling material from the surfaces of membrane so that the rejection enhancing agent is easily adsorbed to the membrane surfaces. For a cleaning agent, an acid (hydrochloric acid, nitric acid, oxalic acid, citric acid, etc), an alkali (potassium hydroxide, sodium hydroxide, etc), a surfactant (sodium dodecyl sulfate, sodium dodecyl benzene sulfate, etc) and an oxidizing or reducing agent (hydrogen peroxide, per-oxy carbonic acid, per-oxy acetic acid, sodium bisulfite, etc) may be used. These cleaning agents are used for cleaning by supplying aqueous solution to a module or by soaking the membrane in an aqueous solution of the cleaning agents.

The rejection enhancing agent comprised in the treatment agent according to the present invention comprises a hydrophilic polymer composed mainly of organic matter and having no hydrophobic group having 8 or more carbon atoms, for which the one having an ability to enhance rejection of soluble compounds such as water soluble organic compound and inorganic electrolyte can be used without any restrictions. The rejection enhancing agent includes an ionic or nonionic water soluble polymer excluding the one having a hydrophobic group having 8 or more carbon atoms, especially hydrophobic group comprising alkyl or alkenyl group having of 8 - 20 carbon atoms. For the ionic polymer, a cationic polymer, an anionic polymer and an amphoteric polymer may be used each solely. However, step wise supply, especially alternate supply of a cationic polymer and an anionic polymer is preferred because higher enhancement of rejection is available. By using these compounds as a main component of the rejection enhancing agent, rejection of RO membrane becomes enhanced so that it becomes possible to remove electrolytes and other compounds such as low molecular weight nonionic organic compound, boron, silica and others which are difficult to remove by a prior RO membrane.

The usable rejection enhancing agent includes a compound having a poly alkylene glycol chain and a compound having phenolic hydroxyl groups. For these, known compounds, compounds described in patent documents 1 - 3 and other compounds having rejection enhancing ability may be used. Illustrative usable rejection enhancing agent includes a compound having a poly ethylene glycol chain of weight average molecular weight of 2000 - 6000 as described in patent document 1. For the compound having a poly alkylene glycol chain, a poly ethylene glycol or poly ethylene glycol derivatives may be used. For other compounds, a water soluble polymer such as poly vinyl methyl ether, poly vinyl alcohol and poly ethylene imine; poly phenol such as tannic acid; and ionic polymers (poly amidine, poly styrene sulfonic acid) described in patent document 3 may also be used.

A preferred rejection enhancing agent includes a compound having a poly alkylene glycol chain. The weight average molecular weight of the compound having a poly alkylene glycol chain is not restricted, while 1,000 - 10,000, more preferably 2,000 - 6,000, further preferably 3,000 - 5,000 is preferred.

The weight average molecular weight in the present invention is obtained by analysis of an aqueous solution of the compound such as polymer and compound having poly alkylene glycol chain in accordance with the gel permeation chromatography, followed by calculation of the molecular weight expressed as that of the reference material of polyethylene oxide based on the obtained chromatogram. In the range of high molecular weight where the reference material of polyethylene oxide is not available, the weight average molecular weight is obtained in accordance with the light scattering method or the ultra centrifugal method.

The compound having a poly alkylene glycol chain can be produced by a ring opening polymerization of alkylene oxide. Illustrative poly alkylene glycol chain contained in the compound includes poly ethylene glycol chain, poly propylene glycol chain, poly trimethylene glycol chain and poly tetramethylene glycol chain. These glycol chains can be formed by a ring opening polymerization of ethylene oxide, propylene oxide, oxetane or tetrahydrofuran. Preferred poly alkylene glycol chain is a poly ethylene glycol chain. A compound having a poly ethylene glycol chain has a great water solubility and better handling for rejection enhancing agent.

For the compound having a poly alkylene glycol chain according to the present invention, a poly alkylene glycol having a terminal end of hydroxyl group and a compound having an ionic group introduced in the poly alkylene glycol are preferred. The ionic group includes an anionic group such as sulfonic group ($-SO_3H$) and carboxyl group (-COOH), a cationic group such as amino group ($-NH_2$) and quaternary ammonium group ($-N^+R_3X^-$) and others. By introducing an anionic group such as sulfonic group and carboxyl group, a water soluble anionic compound can be obtained, while a water soluble cationic compound can be obtained by introducing a cationic group such as amino group and quaternary ammonium group.

For introducing sulfonic group into the poly alkylene glycol chain, for example, by adding epoxy propanol and sodium bisulfite into an aqueous solution of poly ethylene glycol at the temperature of 70 - 90 degrees centigrade to react under reflux condition, a sulfonic poly ethylene glycol represented by formula [1] or [2] can be produced. The compound represented by formula [3] or [4] may also be used.

$$H(OCH_2CH_2)pO(CXH-CYHO)q-SO_3Na \qquad [1]$$

$$NaSO_3-(OCXH-CYH)q-(OCH_2CH_2)pO(CXH-CYHO)_q-SO_3Na \qquad [2]$$

$$H(OCH_2CH_2)p-O-SO_3Na \qquad [3]$$

$$NaSO_3-(OCH_2CH_2)q-O-SO_3Na \qquad [4]$$

(In formulae [1] - [4], X, Y denote each H or $CH_2OH$ independently, p denotes each 50 - 150 independently, q denotes each 1 - 100 independently.)

In the present invention, rejection enhancing treatment is carried out by contacting a permeable membrane with the rejection enhancing agent and a modifying agent comprising a water soluble polymer having a hydrophobic group having 8 or more carbon atoms. The modifying agent comprised in the rejection enhancing treatment agent comprises a water soluble polymer having a hydrophobic group having 8 or more carbon atoms, wherein the modifying agent preferably has a hydrophobic group comprising alkyl or alkylene group having 8 or more carbon atoms, especially 8 - 20 carbon atoms. Since the hydrophobic group comprising alkyl or alkylene group having 8 or more carbon atoms, especially 8 - 20 carbon atoms exhibits a high hydrophobicity and a high affinity to a hydrophobic group of organic compounds, modification thereby is assumed to be suitable for rejection of water soluble organic compound having low molecular weight, removal of which is demanded in the pure water production. When the carbon number is lower than 8, rejection enhancing effect and stability are not sufficient, while water solubility becomes lower and flux decline becomes higher when the carbon number is higher than 20.

For modifying agent, a surfactant having a hydrophilic group and a hydrophobic group is preferable and poly oxyethylene alkyl (or alkenyl) ether, poly oxyethylene alkyl (or alkenyl) phenyl ether, alkyl (or alkenyl) glucoside, poly oxyethylene sorbitan fatty acid ester, alkyl (or alkenyl) trimethyl ammonium chloride, dialkyl (or alkenyl) dimethyl ammonium chloride, alkyl (or alkenyl) pyridinium chloride, etc may be used.

The molecular weight of the modifying agent is not restricted, while weight average molecular weight of 500 - 5,000 is preferred. In the case that the weight average molecular weight is too low, especially lower than 500, fixing effect of the modifying agent after treatment becomes lower and rejection enhancing effect becomes insufficient. In the case that the weight average molecular weight is too high, especially higher than 5,000, there is a possibility of large decline in the flux of permeable membrane.

Treatment by a rejection enhancing agent and treatment by a modifying agent may be carried out simultaneously, or treatment by a rejection enhancing agent may be followed by treatment by a modifying agent. In the case of simultaneous treatment by a rejection enhancing agent and by a modifying agent, treatment by a mixed treatment agent comprising a rejection enhancing agent and a modifying agent is carried out, while treatment by a modifying agent is carried out after treatment by a rejection enhancing agent in the case of successive treatment. The rejection enhancing agent and the modifying agent are selected to adapt to the materials and conformation of the permeable membrane and are dissolved in a solvent such as pure water or a liquid to be treated to prepare a treatment agent or a mixed treatment agent. The mixed treatment agent for the mixed agent treatment may have a concentration of the rejection enhancing agent in the mixed treatment agent being double or more, preferably 2 - 100 times, more preferably 2 - 20 times of the concentration of the modifying agent.

The concentration of the rejection enhancing agent in the rejection enhancing treatment agent or the mixed treatment agent may vary according to kinds of the permeable membranes and types of modules, while the agent is generally prepared to have a concentration of 0.01 - 1000mg/L, preferably 0.1 - 100mg/L and used for rejection enhancing treatment. Plural rejection enhancing agents may be used in combination wherein a mixture of them may be supplied or individuals may be supplied in different times.

The concentration of the modifying agent in the modifying treatment agent or the mixed treatment agent may preferably be 0.01 - 5mg/L, preferably 0.01 - 2mg/L. Since the modifying agent, compared with the rejection enhancing agent, exhibits more effect on flux decline, large amount of addition tends to cause a large flux decline. While suitable concentration of the modifying agent may vary according to kinds of materials, the concentration of the modifying agent may preferably be half or less to the concentration of the rejection enhancing agent, wherein, for example, in the case of the concentration of the rejection enhancing agent being 1 mg/L, the concentration of the modifying agent may preferably be 0.5 mg/L or lower. If the concentration of the modifying agent is lower than 0.01 mg/L, rejection enhancing effect can not be obtained, while the viscosity of the aqueous solution becomes higher to cause high flow resistance of permeable membrane if the concentration is higher than 50 mg/L. Further, in the case of the concentration being higher than 50 mg/L, an unnecessarily thick coating layer is formed to reduce the rejection enhancing effect by concentration polarization.

In the rejection enhancing treatment by a rejection enhancing agent, a modifying agent or a mixed treatment agent, the rejection enhancing agent is supplied to the module to be contacted with the permeable membrane whereby the rejection of the permeable membrane becomes enhanced. Here, the rejection enhancing agent is supplied to the primary side of the module having installed permeable membranes in order for the agent to adhere to the membranes so that the rejection of the permeable membrane becomes enhanced. In the case of a rejection enhancing agent having great adhesiveness, the rejection enhancing agent may adhere to the membrane by maintaining contacted state after supplying the agent to the module or by fluidizing the rejection enhancing agent under a low pressure. In general, however, a rejection enhancing agent is preferably supplied to the module under a high pressure to permeate through the membrane while the permeate is discharged from the secondary side whereby the rejection enhancing agent adheres to the inner part of the membrane.

Operation time for supplying an aqueous solution comprising a rejection enhancing agent or a modifying agent or a mixed treatment agent may preferably be 1 - 24 hours. By using a high concentration solution of the rejection enhancing agent, the operation time for supplying may be shortened but flux decline may possibly become greater. The solution comprising a rejection enhancing agent may be supplied under the condition that a permeate discharge valve of the module is closed. However, by withdrawing the permeate during the treatment, the treatment is carried out efficiently without interruption of the apparatus and the enhancing agent adheres efficiently and uniformly over the surfaces of the membrane. In this case, the solution of the rejection enhancing agent may preferably be supplied to the primary side of the module under the operational pressure of 0.3 MPa or higher with the ratio of [volume of permeated liquid / volume of supplied solution comprising rejection enhancing agent] of 0.2 or more. By this, the rejection enhancing agent contacts effectively with the surfaces of the membrane so as to adhere efficiently and uniformly over the surfaces of the membrane.

In the case that the rejection enhancing treatment is carried out by contacting a permeable membrane with a rejection enhancing agent, the treated membrane is, after the rejection enhancing treatment, contacted with a modifying agent to carry out a modification treatment. In this case, by the same procedure as the rejection enhancing treatment by the rejection enhancing agent, the modification treatment is carried out to modify the membrane.

In the rejection enhancing treatment by the rejection enhancing agent, the rejection enhancing agent of hydrophilic polymer is assumably adsorbed in the pores of the permeable membrane to reject permeation of solute whereby rejection becomes enhanced. According to the present invention, the treatment by a modifying agent having a hydrophobic group is carried out simultaneously with or after the rejection enhancing treatment so that the rejection can further be enhanced. Although sole treatment by a rejection enhancing agent provides an adsorbed layer of low density causing limited rejection, further treatment by a modifying agent assumably provides an adsorbed layer of high density causing good rejection enhancement by entrance of the modifying agent into the inner spaces of the membrane.

Since the modifying agent is, compared with the rejection enhancing agent, more hydrophobic and causes large decline of flux, the treatment by a modifying agent is necessarily carried out simultaneously with or after the rejection enhancing treatment. In the simultaneous treatment, the concentration of the modifying agent must be higher. By the modifying agent treatment which is carried out simultaneously with or after the rejection enhancing treatment, excess adhesion of the modifying agent can be prevented and rejection can be enhanced with minimal decline in the flux, while preceding treatment by the modifying agent causes large decline of flux despite enhancing rejection of water soluble organic compound.

After the rejection enhancing agent treatment and the modifying agent treatment, the treated membrane may be contacted with a fixing agent comprising a polymer having higher weight average molecular weight than the rejection enhancing agent to conduct fixing treatment. For another fixing treatment, the treated membrane may be contacted with a first fixing agent comprising a polymer having higher weight average molecular weight than the rejection enhancing agent, and then with a second fixing agent comprising a polymer having higher weight average molecular weight than the rejection enhancing agent and different ion character from the first fixing agent alternatively one or more times.

The fixing agent used for the above fixing agent, the first or second fixing agent comprises water soluble polymer having weight average molecular weight of 100,000 or higher, preferably 300,000 or higher, more preferably 1,000,000 or higher. The polymer may be ionic or nonionic, while an ionic polymer is preferable. In the case that the weight average molecular weight is lower than 100,000, it becomes difficult to fix the rejection enhancing agent to the membrane stably and to maintain the fixed state. The ionic polymers include a cationic polymer and an anionic polymer which are used for the first and second fixing agents to contact with the membrane alternatively one or more times for fixing treatment.

Illustrative cationic polymer used for the fixing agent includes primary amine such as poly vinyl amine, poly aryl amine, poly acryl amide, chitosan, primary amine added poly styrene; secondary amine such as poly ethylene imine; tertiary amine such as poly (dimethyl amino ethyl acrylate), poly (dimethyl amino ethyl methacrylate); quaternary ammonium compound such as quaternary ammonium group added poly styrene; poly vinyl amidine; heterocyclic compound such as poly vinyl pyridine, poly pyrrole, poly vinyl diazole. Further, copolymers having these structures and compounds of plural polymers may also be used.

Illustrative anionic polymer used for the fixing agent includes a water soluble polymer having corboxyl group such as poly acrylic acid and poly methacrylic acid; a water soluble polymer having sulfonic acid group such as poly styrene sulfonic acid, dextran sulfate, poly vinyl sulfonic acid; and a copolymer having plural structures of these. The sulfonic acid group of poly styrene sulfonic acid adheres to membrane surfaces stably because of strong anion, causing strong fixing with minimal flux decline.

For the ionic polymer used for the fixing agent, both for a cationic fixing agent and an anionic fixing agent, a salt thereof having a counter ion may be used. For the salt having a counter ion, poly vinyl amidine hydro chloride, sodium poly acrylate, sodium poly styrene sulfonate and others may be used.

The fixing agent are selected to adapt to the materials and conformation of the permeable membrane and the used rejection enhancing agent etc, and are dissolved in a solvent such as pure water or a liquid to be treated to prepare a fixing treatment liquid. For the fixing treatment liquid, an aqueous solution of the above water soluble polymer may be used wherein the polymer concentration in the solution may be about 0.01 - 50 mg/L. Preferable compound concentration of the solution containing fixing agent may vary according to the kind of the compound, while 0.1 -10 mg/L may be preferable in case, for instance, of a cationic polymer or an anionic polymer having weight average molecular weight of 100,000 or higher. If the concentration is lower than the above, the fixing treatment provably requires a long period of time. If the concentration is higher than 50 mg/L, the viscosity of the solution becomes higher causing high flow resistance of the RO membrane and unnecessarily thick coating (adsorbed) layer is formed to reduce rejection enhancing effect by concentration polarization.

For the fixing treatment, the permeable membrane treated by the rejection enhancing agent treatment is further contacted with a treating liquid comprising a fixing agent. The fixing agent treatment may be performed following to the rejection enhancing agent treatment wherein after cease of the rejection enhancing agent supply and optional discharge of the rejection enhancing agent, the fixing agent is supplied to perform the fixing treatment. In this case, a treating liquid comprising the fixing agent may preferably be supplied to the primary side of the module.

By performing the above rejection enhancing agent treatment and the modifying agent treatment, an enhanced rejection, especially an enhanced organic matter rejection of the permeable membrane with minimal flux decline is available, which enables high organic matter removal and steady treatment by the membrane.

The permeable membrane according to the present invention is the one obtained by the above the rejection enhancing treatment. The membrane has an enhanced rejection, especially an enhanced organic matter rejection with minimal flux decline, which enables high organic matter removal and steady treatment by the membrane.

The method of permeable membrane treatment according to the present invention is the one in which a liquid to be treated is passed through the permeable membrane obtained by the above rejection enhancing treatment. The obtained permeable membrane has an enhanced rejection, especially an enhanced organic matter rejection with minimal flux decline, which enables high organic matter removal and steady treatment by the membrane.

The apparatus for permeable membrane treatment according to the present invention uses the permeable membrane obtained by the above rejection enhancing treatment, through which a liquid to be treated is passed for permeable membrane treatment. In the permeable membrane treatment by passing the liquid through the membrane, the permeable membrane has an enhanced rejection, especially an enhanced organic matter rejection with minimal flux decline, which enables high organic matter removal and steady treatment by the membrane.

A preferred apparatus for permeable membrane treatment comprises a module of permeable membranes adapted to supply a liquid to be treated to the primary side and to withdraw a permeate from the secondary side, a rejection enhancing agent treatment device adapted to supply to the primary side of the module a rejection enhancing agent comprising a hydrophilic polymer having no hydrophobic group having 8 or more carbon atoms to contact with the permeable membrane and a modifying agent treatment device adapted to supply to the primary side of the module a modifying agent comprising a water soluble polymer having a hydrophobic group having 8 or more carbon atoms to contact with the permeable membrane.

In the above apparatus for permeable membrane treatment, the permeable membrane treatment is carried out by supplying a liquid to be treated to the primary side of the module and withdrawing a permeate from the secondary side of the module. The rejection enhancing agent treatment is carried out by supplying from the rejection enhancing agent treatment device a rejection enhancing agent comprising a hydrophilic polymer to the primary side of the module to contact with the permeable membrane. The modifying agent treatment is carried out by supplying from the modifying agent treatment device a modifying agent comprising a water soluble polymer having a hydrophobic group to the primary side of the module to contact with the permeable membrane. Thus treated permeable membrane has an enhanced rejection, especially an enhanced organic compound rejection with minimal decline in the flux, whereby high removal of organic substances and stable treatment can be performed.

The present invention may be applicable to water treatment for recovery and reuse of high to low TOC concentration water discharged from electronic device manufacturing, semi conductor manufacturing and other various industrial fields or to water treatment for producing ultra high purity water from industrial water or city water. Water to be treated by the present invention is not restricted, while preferably applied water is an organic compound containing water having a TOC concentration of, for example, 0.01 - 100 mg/L, more preferably 0.1 - 10 mg/L. Illustrative organic compound containing water includes an effluent from electronic device manufacturing plant, transport machine manufacturing plant, organic synthesis plant, printing make-up / coating plant and others or the primarily treated water thereof.

In the present invention, by performing the rejection enhancing treatment by contacting a permeable membrane with an rejection enhancing agent and a modifying agent, an enhanced rejection, especially an enhanced organic matter rejection of the permeable membrane with minimal flux decline is available, which enables high organic matter removal and steady treatment by the membrane.

Brief Explanation of the Drawings

Fig. 1 is a flow diagram showing a method and apparatus for permeable membrane treatment according to one mode of the present invention.
Fig. 2 is a flow diagram showing a method and apparatus for permeable membrane treatment according to another mode of the present invention.

1: RO membrane module
2: RO membrane
3: Primary side
4: Secondary side
11: Raw water tank
12: Treated water tank
13: Acidic cleaning solution tank
14: Alkali cleaning solution tank
15: Rejection enhancing agent tank
16: Modifying agent tank

Best mode for Embodying the Invention

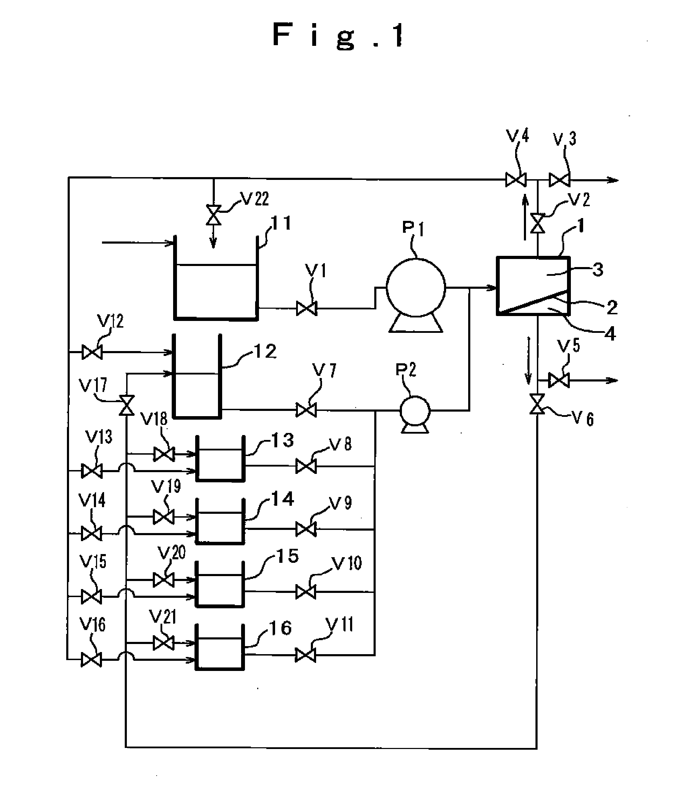

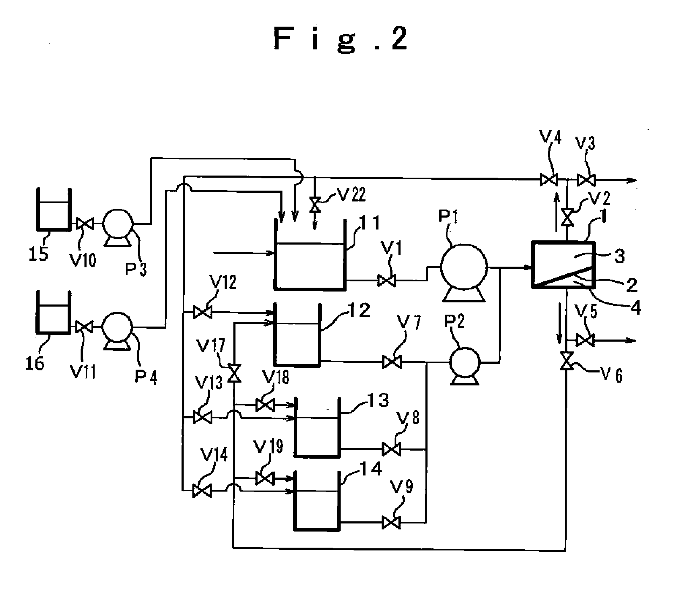

Below, the present invention will be described by way of mode of embodiment with reference to the appended drawings. Figs. 1 and 2 are flow diagrams, each showing the method and apparatus for permeable membrane treatment according to the present invention in a different mode.

In Figs. 1 and 2, numeral 1 denotes a RO membrane module which is partitioned by a RO membrane 2 for a permeable membrane into the primary side 3 and secondary side 4. 11 is a raw water tank, 12 is a treated water tank, 13 is an acidic cleaning solution tank, 14 is an alkali cleaning solution tank, 15 is a rejection enhancing agent tank, 16 is a modifying agent tank, P1 is a raw water pump, P2 is a chemical solution pump, P3 is a rejection enhancing agent pump and P4 is a modifying agent pump. V1 - V22 each denotes a valve. In Figs. 1 and 2, main lines and valves are illustrated and other lines, valves and gauges are omitted.

In Figs. 1 and 2, RO treatment of a raw water (a water to be treated) is carried out by opening the valves V1, V2, V3, V4, V5 and V22, closing the other valves, and starting the pump P1 to supply the raw water in the raw water tank 11 to the primary side 3 of the RO membrane module 1 for RO membrane separation by RO membrane 2, wherein a permeate is withdrawn outside as a treated water from the secondary side 4. Concentrated water is returned from the primary side 3 to the raw water tank 11, while a part of the concentrated water is discharged outside from the valve V3 in order to prevent concentration of RO feed. By opening valves V6, V17, a part of permeate is stored in the treated water tank 12. Further, by opening valves V18, V19, V20, V21, a part of permeate may be sent to the acidic cleaning solution tank 13, the alkali cleaning solution tank 14, the rejection enhancing agent tank 15 or the modifying agent tank 16 to be used for dilution or preparation of an acidic cleaning solution, an alkali cleaning solution, a rejection enhancing agent solution or a modifying agent solution.

When the RO membrane performance (in flux or rejection) has declined by RO treatment, acidic cleaning is carried out by stopping pump P1, opening the valves V2, V4, V8, V13, closing the other valves and starting the pump P2 to introduce the acidic cleaning solution in the acidic cleaning solution tank 13 into the primary side 3 of the RO membrane module 1 and then to circulate to the tank 13. Here, by opening the valve V5, a part of cleaning solution can permeate through the membrane and be discharged outside, or by opening valves V6, V18, the permeated cleaning solution is returned to the tank 13. After the cleaning solution has been circulated for a certain period, or after the cleaning solution has been held in static state for a certain period after stopping of the pump P2, the cleaning solution is discharged out from a drain pipe installed in the tank 13 (not shown).

Alkali cleaning is carried out by opening the valves V2, V4, V9, V14, closing the other valves, and starting the pump P2 to introduce the alkali cleaning solution in the alkali cleaning solution tank 14 into the primary side 3 of the RO membrane module 1 and then to circulate to the tank 14. Here, by opening the valve V5, a part of cleaning solution can permeate through the membrane and be discharged outside, or by opening valves V6, V19, the permeated cleaning solution is returned to the tank 14. After the cleaning solution has been circulated for a certain period, or after the cleaning solution has been held in static state for a certain period after stopping of the pump P2, the cleaning solution is discharged out from a drain pipe installed in the tank 14 (not shown). The alkali cleaning and acid cleaning may be carried out in any order and may be repeated alternatively twice or more according to the deterioration condition of the RO membrane and kinds of the rejection enhancing agent.

In Fig. 1, for the rejection enhancing treatment by an aqueous solution comprising a rejection enhancing agent, the rejection enhancing agent aqueous solution is stored in the rejection enhancing agent tank 15. For the rejection enhancing treatment by a mixed treatment agent of a rejection enhancing agent and a modifying agent, the mixed treatment agent is stored in the rejection enhancing agent tank 15. The rejection enhancing treatment is carried out by opening the valves V2, V4, V10, V 15, closing the other valves, and starting the pump P2 to introduce the rejection enhancing agent aqueous solution or the mixed treatment agent in the rejection enhancing agent tank 15 into the primary side 3 of the RO membrane module 1 and then to circulate to the tank 15. Here, by opening the valve V5, a part of the rejection enhancing agent aqueous solution or the mixed treatment agent can permeate through the membrane and be discharged outside, while by opening valves V6, V20, the permeated rejection enhancing agent aqueous solution or mixed treatment agent is preferably returned to the tank 15. After circulation for a certain period, the rejection enhancing agent aqueous solution or the mixed treatment agent is discharged out from a drain pipe installed in the tank 15 (not shown).

Then by opening the valves V2, V3, V6, V7, V20, and closing the other valves, the treated water in the treated water tank 12 is supplied to the primary side 3 of the RO membrane module 1 for cleaning, and a part of the rejection enhancing agent aqueous solution or the mixed treatment agent is discharged outside from valve V3 and the other part is discharged outside via the tank 15.

In Fig. 1, for performing the modifying treatment by a modifying agent after the rejection enhancing treatment by a rejection enhancing agent aqueous solution, the modifying agent aqueous solution is stored in the modifying agent tank 16. The modifying treatment is carried out by opening the valves V2, V4, V11, V16 and closing the other valves to introduce the modifying agent aqueous solution in the modifying agent tank 16 into the primary side 3 of the RO membrane module 1 and then to circulate to tank 16. Here, by opening the valve V5, a part of the modifying can permeate through the membrane and be discharged outside, while by opening valves V6, V21, the permeated modifying agent aqueous solution is preferably returned to the tank 16. After circulation for a certain period, the modifying agent aqueous solution is discharged out from a drain pipe installed in the tank 16 (not shown). When the rejection enhancing treatment by a mixed treatment agent of a rejection enhancing agent and a modifying agent has been carried out, this modifying treatment may be omitted.

Then by opening the valves V2, V3, V6, V7, V21, closing the other valves, the treated water in the treated water tank 12 is supplied to the primary side 3 of the RO membrane module 1 for rinse, and a part of the rejection enhancing agent aqueous solution or the mixed treatment agent is discharged outside from valve V3 and the other part is discharged outside via the tank 16. This step may be omitted.

In Fig. 2, for the rejection enhancing treatment by a rejection enhancing agent aqueous liquid, the rejection enhancing agent aqueous solution is stored in the rejection enhancing agent tank 15. For the rejection enhancing treatment by a mixed treatment agent of a rejection enhancing agent and a modifying agent, the mixed treatment agent is stored in the rejection enhancing agent tank 15. The rejection enhancing treatment is carried out by opening the valve V10 and starting the pump P3 to introduce the rejection enhancing agent aqueous solution or the mixed treatment agent in the rejection enhancing agent tank 15 into the raw water tank 11, and then by starting the pump P1, opening the valves V1, V2, V4, V22, and closing the other valves to introduce the raw water containing the rejection enhancing agent aqueous solution or the mixed treatment agent in the raw water tank 11 into the primary side 3 of the RO membrane module 1 and then to circulate to tank 11. Here, by opening the valves V3, V5, a part of the raw water containing the rejection enhancing agent aqueous solution or the mixed treatment agent can preferably permeate through the membrane to obtain a treated water and a part of the raw water containing the rejection enhancing agent aqueous solution or the mixed treatment agent is discharged outside. By this, period to interrupt operation of RO treatment apparatus is shortened. After the raw water containing the rejection enhancing agent aqueous solution or the mixed treatment agent has been circulated for a certain period, by closing the valve 10 and stopping the pump P3, introduction of the rejection enhancing agent aqueous solution or the mixed treatment agent is terminated.

Then by opening the valves V2, V3, V7, closing the other valves and stopping pump P1 and starting pump P2, the treated water in the treated water tank 12 is supplied to the primary side 3 of RO membrane module 1 for cleaning, and the raw water containing the rejection enhancing agent aqueous solution or the mixed treatment agent is discharged outside from the valve V3.

In Fig. 2, for the modifying treatment by a modifying agent after the rejection enhancing treatment by a rejection enhancing agent aqueous solution, the modifying agent aqueous solution is stored in the modifying agent tank 16. The modifying treatment is carried out by opening the valve V11 and starting the pump P4 to introduce the modifying agent aqueous solution in the modifying agent tank 16 into the raw water tank 11, and then by starting the pump P1, opening the valves V1, V2, V4, V22 and closing the other valves to introduce the raw water containing the modifying agent in the raw water tank 11 into the primary side 3 of RO membrane module 1 and then to circulate to tank 11. Here, by opening the valves V3, V5, a part of the raw water containing the modifying agent can preferably permeate through the membrane to obtain a treated water and a part of the raw water containing the modifying agent is discharged outside. By this, period to interrupt operation of RO treatment apparatus is shortened. After the raw water containing the modifying agent has been circulated for a certain period, by closing the valve 10 and stopping the pump P3, introduction of the modifying agent aqueous solution is terminated. When the rejection enhancing treatment by a mixed treatment agent of a rejection enhancing agent and a modifying agent has been carried out, this modifying treatment may be omitted.

Then by opening the valves V2, V3, V7, closing the other valves, stopping pump P1 and starting P2, the treated water in the treated water tank 12 is supplied to the primary side 3 of the RO membrane module 1 for rinse, and the modifying agent aqueous solution is discharged outside from the valve V3. The rinse step is shortened or omitted by RO treatment of the raw water for a certain period (about three times of the resident time in the raw water tank 11) after termination of introduction of the modifying agent aqueous solution.

The above modes show embodiments of the RO membrane treatment according to the present invention and the present invention is not restricted by these modes. Tanks in Figs 1 and 2 may be for common use type or omitted. The RO membrane treatment, the cleaning, the rejection enhancing treatment and the modifying treatment may be performed in different sites respectively. For instance, an RO membrane element taken out of a vessel may be transferred to other place (for instance, RO membrane regeneration factory), to carry out cleaning, rejection enhancing treatment and modifying treatment as installed in another vessel there. On the contrary, a treated RO element may be transferred to other place where RO membrane treatment is performed. In Fig 2, the rejection enhancing agent aqueous solution and modifying agent aqueous solution are introduced into the raw water tank 11, while these aqueous solution may be directly introduced into the pipe connecting the raw water tank 11 and RO membrane module 1.

Below, the present invention will be described by way of Examples wherein the rejection was calculated by the following equation;

$$\text{Rejection (\%)} = [1 - \{(\text{Solute Concentration of Permeate}) \times 2\} / \{(\text{Solute Concentration of Feed}) + (\text{Solute Concentration of Concentrate})\}] \times 100$$

[Example 1]:

A mixed aqueous solution of 1mg/L of poly ethylene glycol having a weight average molecular weight of 4,000 and 0,1mg/L of poly oxyethylene (50) oleyl ether was supplied to a brand-new RO membrane module of ultra low pressure aromatic polyamide type "ES - 20" of Nitto Electric Industrial Co., Ltd. for 20 hours at a pressure of 0.75 MPa for total circulation treatment in which both of the concentrate and the permeate are returned to the feed tank. The treated RO membrane module was installed in a RO membrane apparatus and then a 1000 mg/L aqueous solution of IPA (isopropyl alcohol) was supplied at a pressure of 0.75 MPa and a brine rate of 1 $m^3$/h. The permeate rate and TOC concentrations of the feed, the concentrate and the permeate were periodically measured and the flux and IPA rejection were calculated.

[Example 2]:

The procedures of Example 1 were pursued except that the poly ethylene glycol having a weight average molecular weight of 4,000 was replaced with sulfonic poly ethylene glycol which was synthesized by reacting 1mmol/L of poly ethylene glycol having a weight average molecular weight of 4,000, 100mmol/L of 2, 3-epoxy-1-propanol and 100mmol/L of sodium sulfite at 80 degrees centigrade under reflux condition for 20 minutes.

[Example 3]:

A 1mg/L aqueous solution of poly ethylene glycol having a weight average molecular weight of 4,000 was supplied to a brand-new RO membrane module of ultra low pressure aromatic polyamide type "ES - 20" of Nitto Electric Industrial Co., Ltd. for 20 hours at a pressure of 0.75 MPa for total circulation treatment in which both of the concentrate and the permeate are returned to the feed tank. Then a 0.1mg/L aqueous solution of poly oxyethylene (50) oleyl ether was supplied for 20 hours for the same total circulation treatment. The treated RO membrane module was installed in a RO membrane apparatus and then a 1000 mg/L aqueous solution of IPA (isopropyl alcohol) was supplied at a pressure of 0.75 MPa and a brine rate of 1 $m^3$/h. The permeate rate and TOC concentrations of the feed, the concentrate and the permeate were periodically measured and the flux and IPA rejection were calculated.

[Example 4]:

The procedures of Example 1 were pursued except that the poly oxyethylene (50) oleyl ether was replaced with poly oxyethylene (20) nonylphenyl ether.

[Example 5]:

The procedures of Example 1 were pursued except that the poly oxyethylene (50) oleyl ether was replaced with lauryl glucoside.

[Example 6]:

The procedures of Example 1 were pursued except that the poly oxyethylene (50) oleyl ether was replaced with stearyl trimethyl ammonium chloride.

[Comparative Example 1]:

The procedures of Example 1 were pursued except that a brand-new RO membrane module of ultra low pressure aromatic polyamide type "ES - 20" of Nitto Electric Industrial Co., Ltd. was installed in a RO membrane apparatus without rejection enhancing treatment.

[Comparative Example 2]:

The procedures of Example 1 were pursued except that the mixed aqueous solution was replaced with an aqueous solution of 1mg/L of poly ethylene glycol having a weight average molecular weight of 4,000.

[Comparative Example 3]:

The procedures of Example 1 were pursued except that the mixed aqueous solution was replaced with an aqueous solution of_0.1mg/L of poly oxyethylene (50) oleyl ether.

[Comparative Example 4]:

The procedures of Example 3 were pursued except that the treatment was carried out in a different order wherein a 0.1mg/L aqueous solution of poly oxyethylene (50) oleyl ether was supplied for 20 hours for the same total circulation treatment and then a 1mg/L aqueous solution of poly ethylene glycol having a weight average molecular weight of 4,000 was supplied for 20 hours for the same total circulation treatment.

The IPA rejections and fluxes after 100 hours from the supply of the aqueous solution of IPA in the Examples 1 - 6 and the Comparative Examples 1 - 4 are tabulated in Table 1.

Table 1

| | After 100 hours from Supply of IPA sol. | |
|---|---|---|
| | IPA Rejection (%) | Flux ($m^3/m^2d$) |
| Example 1 | 97.5 | 0.60 |
| Example 2 | 97.9 | 0.59 |
| Example 3 | 97.6 | 0.58 |
| Example 4 | 97.5 | 0.62 |
| Example 5 | 97.3 | 0.63 |
| Example 6 | 97.4 | 0.60 |
| Comparative Example 1 | 92.6 | 0.81 |
| Comparative Example 2 | 94.4 | 0.69 |
| Comparative Example 3 | 96.6 | 0.49 |
| Comparative Example 4 | 96.7 | 0.45 |

As clear from the above Examples and Comparative Examples, it is understood that using the RO membrane treated with the rejection enhancing agent and the modifying agent according to the present invention, organic compounds have been removed from the RO treated water at a high degree while a stable flux has been maintained.

Industrial Applicability

The present invention is applicable to a method of enhancing rejection of a permeable membrane such as reverse osmosis membrane, nano-filtration membrane, and so on, a rejection enhancing treatment agent used for the method, a rejection-enhanced membrane obtained thereby, a method of permeable membrane treatment using these membranes and apparatus for treatment by permeable membranes suitable for these.

**Claims**

1. A method of enhancing rejection of a permeable membrane, comprising
   contacting the permeable membrane with
   a rejection enhancing agent comprising a hydrophilic polymer having no hydrophobic group having 8 or more carbon atoms and
   a modifying agent comprising a water soluble polymer having a hydrophobic group having 8 or more carbon atoms.

2. A method of enhancing rejection of a permeable membrane, comprising
   contacting the permeable membrane with a mixed treatment agent comprising
   a rejection enhancing agent comprising a hydrophilic polymer having no hydrophobic group having 8 or more carbon atoms and
   a modifying agent comprising a water soluble polymer having a hydrophobic group having 8 or more carbon atoms, wherein the concentration of the rejection enhancing agent in the mixed treatment agent is double or more of the concentration of the modifying agent.

**3.** A method of enhancing rejection of a permeable membrane, comprising
contacting the permeable membrane with a rejection enhancing agent comprising a hydrophilic polymer having no hydrophobic group having 8 or more carbon atoms and
then contacting the permeable membrane with a modifying agent comprising a water soluble polymer having a hydrophobic group having 8 or more carbon atoms.

**4.** The method as claimed in any one of claims 1 to 3, wherein the rejection enhancing agent is a compound having a poly alkylene glycol chain.

**5.** The method as claimed in any one of claims 1 to 4, wherein the modifying agent has a hydrophobic group comprising alkyl or alkylene group having 8 - 20 carbon atoms.

**6.** The method as claimed in any one of claims 1 to 5, wherein the modifying agent is a surfactant having a hydrophilic group and a hydrophobic group.

**7.** A permeable membrane obtained by the method as claimed in any one of claims 1 to 6.

**8.** A method of permeable membrane treatment, comprising
passing a liquid to be treated through the permeable membrane obtained by the method as claimed in any one of claims 1 to 6.

**9.** An apparatus for permeable membrane treatment, comprising
the permeable membrane obtained by the method as claimed in any one of claims 1 to 6 and
means for passing a liquid to be treated through the permeable membrane.

**10.** An apparatus for permeable membrane treatment, comprising
a module of a permeable membrane adapted to supply a liquid to be treated to the primary side and to withdraw a permeate from the secondary side,
a rejection enhancing agent treatment device adapted to supply to the primary side of the module a rejection enhancing agent comprising a hydrophilic polymer having no hydrophobic group having 8 or more carbon atoms to contact with the permeable membrane and
a modifying agent treatment device adapted to supply to the primary side of the module a modifying agent comprising a water soluble polymer having a hydrophobic group having 8 or more carbon atoms to contact with the permeable membrane.

**11.** A rejection enhancing treatment agent for rejection enhancing treatment of a permeable membrane by contacting with the permeable membrane, comprising
a rejection enhancing agent comprising a hydrophilic polymer having no hydrophobic group having 8 or more carbon atoms and
a modifying agent comprising a water soluble polymer having a hydrophobic group having 8 or more carbon atoms.

**12.** The treatment agent as claimed in claim 11, comprising a mixture of
a rejection enhancing agent comprising a hydrophilic polymer having no hydrophobic group having 8 or more carbon atoms and
a modifying agent comprising a water soluble polymer having a hydrophobic group having 8 or more carbon atoms, wherein the concentration of the rejection enhancing agent in the mixture is double or more of the concentration of the modifying agent.

**13.** The treatment agent as claimed in claims 11 or 12, wherein the rejection enhancing agent is a compound having a poly alkylene glycol chain.

**14.** The treatment agent as claimed in any one of the claims 11 to 13, wherein the modifying agent has a hydrophobic group comprising alkyl or alkylene group having 8 - 20 carbon atoms.

**15.** The treatment agent as claimed in any one of claims 11 to 14, wherein the modifying agent is a surfactant having a hydrophilic group and a hydrophobic group.

Fig.1

# Fig.2

## INTERNATIONAL SEARCH REPORT

| | International application No. |
|---|---|
| | PCT/JP2008/062988 |

**A. CLASSIFICATION OF SUBJECT MATTER**
*B01D67/00*(2006.01)i

According to International Patent Classification (IPC) or to both national classification and IPC

**B. FIELDS SEARCHED**

Minimum documentation searched (classification system followed by classification symbols)
B01D67/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 59-24732 A (Mitsubishi Rayon Co., Ltd.),<br>08 February, 1984 (08.02.84),<br>Claim 1; example 1<br>& US 4501785 A      & EP 100552 A2<br>& DE 3378746 D      & CA 1207607 A<br>& DD 212649 A | 1,4-15<br>2,3 |
| Y<br>A | JP 54-153872 A (Mitsubishi Rayon Co., Ltd.),<br>04 December, 1979 (04.12.79),<br>Claim 1; examples<br>(Family: none) | 1,4-15<br>2,3 |
| Y<br>A | JP 3-47521 A (Toray Industries, Inc.),<br>28 February, 1991 (28.02.91),<br>Claim 1; page 2, lower right column, lines 14<br>to 18; example 1<br>(Family: none) | 1,4-15<br>2,3 |

| ☒ Further documents are listed in the continuation of Box C. | ☐ See patent family annex. |
|---|---|

| | |
|---|---|
| \* Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 October, 2008 (06.10.08) | 14 October, 2008 (14.10.08) |

| Name and mailing address of the ISA/<br>Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
|---|
| PCT/JP2008/062988 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2001-286741 A  (Toray Industries, Inc.),<br>16 October, 2001 (16.10.01),<br>Par. No. [0054]<br>(Family: none) | 1,4-15<br>2,3 |

Form PCT/ISA/210 (continuation of second sheet) (April 2007)

| INTERNATIONAL SEARCH REPORT | International application No. |
|---|---|
| | PCT/JP2008/062988 |

Claims 1 to 3, 10 and 11 relate to a blocking rate improving treatment agent for a permeable membrane, comprising "a blocking rate improving agent of a hydrophilic polymer free from a hydrophobic group having 8 or more carbon atoms, and a modifying agent of a water soluble polymer containing a hydrophobic group having 8 or more carbon atoms", a method for improving the blocking rate of a permeable membrane using the treatment agent, and a permeable membrane apparatus. The outer limit of a specific material included in both the "blocking rate improving agent of a hydrophilic polymer free from a hydrophobic group having 8 or more carbon atoms", and the "modifying agent of a water soluble polymer containing a hydrophobic group having 8 or more carbon atoms" is not clear. Further, what is disclosed within the meaning of PCT Article 5 is only polyethylene glycol and sulfonated polyethylene glycol for the former, and only surfactants containing a hydrophilic group and a hydrophobic group for the latter. Accordingly, the claims 1 to 3, 10 and 11 are inadequately supported within the meaning of PCT Article 6.

For the above reason, this search has been made on materials supported by the description and disclosed therein, namely, polyethylene glycol and sulfonated polyethylene glycol as the "blocking rate improving agent of a hydrophilic polymer free from a hydrophobic group having 8 or more carbon atoms" and the surfactant containing a hydrophilic group and a hydrophobic group as the "modifying agent of a water soluble polymer containing a hydrophobic group having 8 or more carbon atoms".

Form PCT/ISA/210 (extra sheet) (April 2007)

**EP 2 172 257 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008036605 A
- JP 2762358 B
- JP 2006110520 A